**Europäisches Patentamt**

**European Patent Office**

**Office européen des brevets**

(19)

(11) Veröffentlichungsnummer : **0 053 774**
**B1**

(12) # EUROPÄISCHE PATENTSCHRIFT

(45) Veröffentlichungstag der Patentschrift :
05.09.84

(51) Int. Cl.³ : **E 06 B 5/12**

(21) Anmeldenummer : **81109984.5**

(22) Anmeldetag : **28.11.81**

(54) Sprengwirkungshemmende Verglasung aus Verbundglas.

(30) Priorität : **05.12.80 DE 3045833**

(43) Veröffentlichungstag der Anmeldung :
**16.06.82 Patentblatt 82/24**

(45) Bekanntmachung des Hinweises auf die Patenterteilung : **05.09.84 Patentblatt 84/36**

(84) Benannte Vertragsstaaten :
**AT BE CH DE FR GB IT LI LU NL SE**

(56) Entgegenhaltungen :
CH-A-  504 610
DE-A- 1 659 688
FR-A- 1 515 955
GB-A- 1 573 936
US-A- 3 393 485
US-A- 4 027 443

(73) Patentinhaber : **VEGLA Vereinigte Glaswerke GmbH**
**Viktoria Allee 3-5**
**D-5100 Aachen (DE)**

(72) Erfinder : **Schumacher, Lorenz**
**Am Büschchen 10**
**D-5100 Aachen (DE)**
Erfinder : **Straeten, Franz-Josef**
**Haarener Gracht 54**
**D-5100 Aachen (DE)**

(74) Vertreter : **Biermann, Wilhelm, Dr.-Ing.**
**VEGLA Vereinigte Glaswerke GmbH Viktoriaallee 3-5**
**D-5100 Aachen (DE)**

## Beschreibung

Die Erfindung betrifft eine sprengwirkungshemmende Verglasung aus wenigstens zwei mit Luftabstand voneinander angeordneten Verbundglaseinheiten.

Es ist bekannt, sogenannte Panzerglasscheiben, das heißt Verbundglasscheiben aus mehreren Silikatglasplatten und diese miteinander verbindenden weichen Schichten aus Kunststoff, wie Polyvinylbutyral, auch als Verglasungen zum Schutz gegen Explosionen einzusetzen.

Verglasungen aus Panzerglas, bei denen mehrere durch luftgefüllte Zwischenräume voneinander getrennte Verbundglasscheiben hintereinander angeordnet sind, sind z. B. aus der CH-PS 504 610 bekannt. Besondere Maßnahmen zum Einbau der Verbundglasscheiben in die Fensteröffnung sind bei diesem bekannten Aufbau nicht vorgesehen, vielmehr werden die Verbundglasscheiben offenbar in üblicher Weise in einen Rahmen fest eingespannt.

Gemäß der DE-OS 16 59 688 ist es auch bei Explosionsschutzverglasungen aus mehrschichtigen Kunststoffscheiben oder -blöcken bekannt, die einzelnen Kunststoffblöcke durch Distanzkörper auf Abstand voneinander zu halten. Unter Zwischenschaltung dieser rahmenförmigen Distanzkörper, die aus Gummi oder einem weichen Metall wie Aluminium und Bleib bestehen, sind bei dieser bekannten Verglasung die Kunststoffblöcke durch mechanische Mittel fest miteinander verspannt. Die Kunststoffblöcke sind unter Zwischenschaltung einer Gummiummantelung von einer gemeinsamen Hülse aus einem harten Material umgeben.

Aus der US-PS 4 027 443 ist ferner eine gleichzeitig feuerhemmend und durchbruchhemmend wirkende Verglasung bekannt, bei der zwei äußere Platten aus schlagfestem Kunststoff über Luftzwischenräume mit einer inneren feuerwiderstandsfähigen Silikatglasplatte in einer Metallrahmenkonstruktion angeordnet sind. Die Kunststoffplatten sind dabei von im Querschnitt L-förmigen Metallprofilen eingefaßt, und zwar unter Zwischenschaltung einer Schicht aus üblichem Glaserkitt.

Keine der bekannten Verglasungen eignet sich als Explosionsschutzverglasung, wenn man sehr hohe Anforderungen an solche Schutzverglasungen stellt. Wenn zum Beispiel bei einem Explosionsanschlag eine Sprengladung unmittelbar auf oder vor dem Fenster angebracht wird, entstehen derartig hohe Explosionsdrücke, daß alle bekannten Schutzfensteraufbauten diesen Kräften nicht standhalten, sondern daß die Glasscheiben zerstört werden und die Fensteröffnung freigegeben wird. Explosionsversuche haben dabei gezeigt, daß der Einfassung der Glasscheiben eine besondere Bedeutung zukommt.

Ausgehend von dem genannten Stand der Technik liegt der Erfindung die Aufgabe zugrunde, die Lagerung der Verbundglasscheiben in der Fensteröffnung so auszugestalten, daß dadurch die Widerstandsfähigkeit der Verglasung gegen Explosionsdrücke erhöht wird.

Erfindungsgemäß wird diese Aufgabe dadurch gelöst, daß jede Verbundglaseinheit von einem geschlossenen Rahmen aus im Querschnitt L-förmigen Stahlprofilen umgeben ist, wobei der in die Sichtfläche hineinragende Schenkel des Rahmens auf der der Sprengwirkung abgewandten Seite angeordnet ist, und zwischen den Innenflächen des Stahlrahmens und den Glasoberflächen ein Abstand von wenigstens etwa 10 mm besteht, der von einem dauerelastischen Kunststoff mit einer Shore-Härte von wenigstens 25 Grad Shore und höchstens etwa 60 Grad Shore ausgefüllt ist.

Es hat sich gezeigt, daß durch die Anordnung eines geschlossenen Stahlrahmens aus miteinander verschweißten Stahlprofilabschnitten mit verhältnismäßig großem Querschnitt um jede Verbundglaseinheit herum eine hohe Sprengwirkungshemmung erzielt wird, wenn gleichzeitig zwischen diesem Rahmen mit hoher Festigkeit und der Verbundglasscheibe eine nachgiebige Zwischenschicht mit einer Mindestdicke von 10 mm angeordnet ist. Diese elastische Zwischenschicht stellt gewissermaßen eine federnde Auflage für die Verbundglasscheibe dar, was sich gerade bei den außerordentlich hohen und kurzzeitigen Explosionsdrücken als besonders günstig und wirkungsvoll erwiesen hat. Insbesondere kommt auch der Zwischenschaltung des dauerelastischen Materials zwischen den Schnittkanten der Verbundglasscheibe und dem Stahlrahmen eine wesentliche Bedeutung zu. Die elastisch nachgiebige Lagerung auch an den Umfangsflächen der Verbundglaseinheiten begünstigt einerseits die « federnde » Lagerung der Verbundglasscheiben. Andererseits verhindert die elastische Schicht zwischen den Umfangsflächen der Verbundglasscheiben und den Stahlrahmen, daß die Glasscheiben während der Explosionsbeanspruchung seitlich ausweichen können.

In zweckmäßiger Weiterbildung der Erfindung hat der in die Sichtfläche hineinragende Schenkel des Stahlrahmens eine Länge von wenigstens 30 mm, und vorzugsweise von 50 bis 80 mm, und die dauerelastische Kunststoffschicht zwischen dem Stahlrahmen und dem Rand der Verbundglasscheibe hat vorzugsweise eine Dicke von 10 bis 20 mm.

Andere zweckmäßige Ausgestaltungen und Weiterbildungen der Erfindung sind Gegenstand der Unteransprüche.

In den Zeichnungen sind zwei Ausführungsbeispiele für nach der Erfindung aufgebaute Verglasungen dargestellt. Es zeigt :

Figur 1 eine Verglasung mit insgesamt vier Verbundglaseinheiten in einer Schnittdarstellung und vergrößerten Detailschnittaufbrüchen, die den Aufbau der Verbundglaseinheiten darstellen, und

Figur 2 eine Verglasung mit insgesamt sechs Verbundglaseinheiten, ebenfalls in einer Schnittdarstellung.

Die einzelnen Verbundglaseinheiten des Fensters sind in der Fensteröffnung 1 der Wand 2 mit Mitteln gehalten, die der besseren Übersicht wegen nicht dargestellt sind. Dabei kann es sich um bekannte und übliche Haltekonstruktionen handeln.

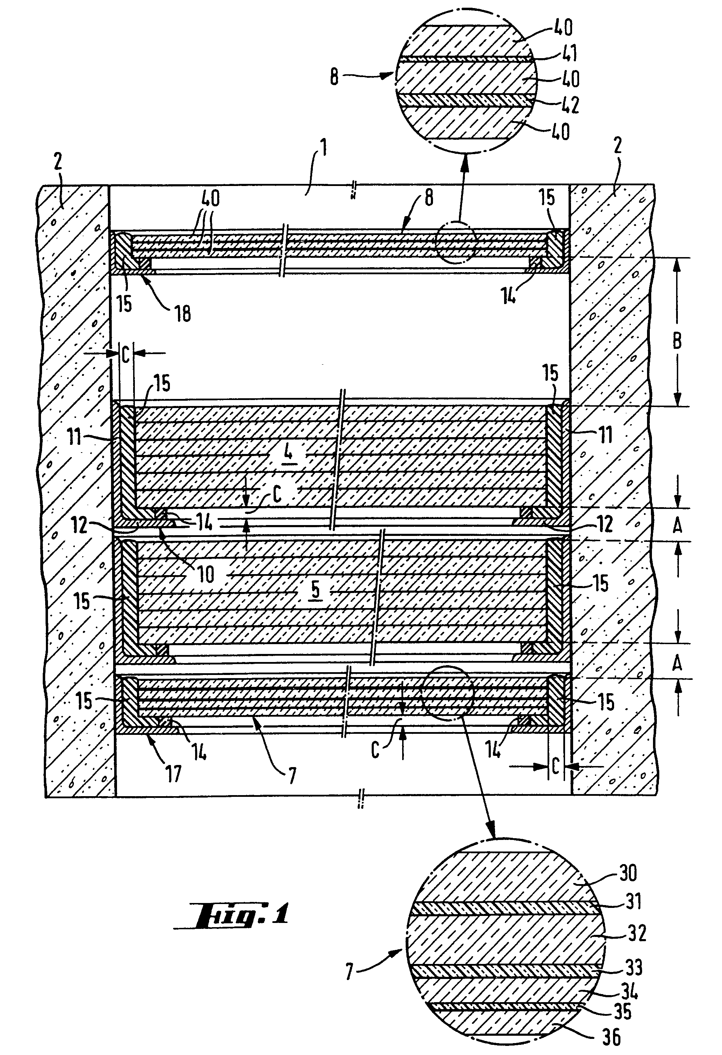

Das in Fig. 1 dargestellte Fenster umfaßt zwei Verbundglaseinheiten 4, 5 von je 120 mm Dicke. Jede Verbundglaseinheit 5 besteht aus sechs Einzelglasscheiben aus Floatglas von 19 mm Dicke, die mittels 0,78 mm dicken Folien aus thermoplastischem Polyvinylbutyral miteinander verbunden sind.

Jede Verbundglaseinheit 4, 5 ist von einem Stahlrahmen 10 aus einem L-Profil umgeben. Der längere Schenkel 11 des L-Profils hat eine Länge von 150 mm, und der kürzere Schenkel 12, der die Verbundglaseinheit auf dem Randbereich der Sichtfläche abstützt, hat eine Länge von 75 mm. Die Wandstärke des L-Profils beträgt 10 mm. Die einzelnen Profilabschnitte des Stahlrahmens 10 sind an den Ecken zusammengeschweißt.

Im vorderen Endbereich des Schenkels 12 der Rahmenprofile ist zwischen diesem und der Verbundglasscheibe ein Profilstreifen 14 aus einem dauerelastischen Material angeordnet. Als Material hierfür eignet sich beispielsweise Butylkautschuk. Dieser Profilstreifen 14 wird in den Rahmen 10 eingelegt, bevor die Verbundglaseinheit in den Rahmen eingesetzt wird. Der Profilstreifen 14 hat einerseits die Aufgabe, die Verbundglasscheibe in dem erforderlichen Abstand C von dem Rahmen zu halten, und dient andererseits dazu, den beim Einsetzen der Verbundglasscheibe zwischen dieser und dem Rahmen entstehenden Hohlraum so abzudichten, daß dieser Hohlraum mit einer gießfähigen Kunststoffmasse 15 ausgefüllt werden kann. Der Profilstreifen 14 hat einen Durchmesser bzw. eine Kantenlänge von etwa 15 mm. Der Stahlrahmen 10 und die Verbundglasscheibe 4 sind in ihrer Größe so aufeinander abgestimmt, daß der zwischen der Verbundglasscheibe 4, dem Stahlrahmen 10 und dem Schenkel 11 entstehende Hohlraum eine Breite C von ebenfalls etwa 15 mm hat.

Dieser von dem Randbereich der Verbundglasscheibe 4, dem Stahlrahmen 10 und dem Profilstreifen 14 gebildete Hohlraum wird mit einem gießfähigen Silikonkautschuk 15 ausgegossen, der nach dem Aushärten eine Endhärte von 30 bis 35 Grad Shore aufweist. Für diesen Zweck eignet sich z. B. der Zweikomponenten-Silikonkautschuk RTV E 602 der Firma Wacker-Chemie in München.

Um eine dauerhafte gute Haftung zwischen dem Silikonkautschuk und dem Glas bzw. dem Stahlrahmen zu gewährleisten, können die Glas- und Stahlflächen zuvor in bekannter Weise mit einem für das jeweils verwendete gießfähige Material geeigneten Primer versehen werden. Für den oben genannten Silikonkautschuk eignet sich beispielsweise der Primer G 790 der Firma Wacker-Chemie.

Die beiden jeweils mit einem Stahlrahmen umgebenen Verbundglaseinheiten 4, 5 werden so in die Fensteröffnung 1 eingesetzt, daß der Abstand A zwischen den beiden benachbarten Glasoberflächen etwa 30 mm beträgt.

Auf der der Explosion abgewandten Seite des Fensters ist vor der Verbundglaseinheit 5 ebenfalls mit einem Abstand A von etwa 30 mm eine weitere Verbundglaseinheit 7 angeordnet, die auf die gleiche Weise mit einem Stahlrahmen 17 aus miteinander verschweißten Winkelprofilen versehen ist wie die Verbundglaseinheiten 4 und 5. Auch bei dieser Verbundglaseinheit 7 ist ein Zwischenraum C von 10 bis 20 mm Breite mit einem dauerelastischen Material 15 ausgefüllt. Die Verbundglaseinheit 7 hat, von der Explosionsseite her gesehen, folgenden Aufbau: 12 mm dicke Glasscheibe 30 — 3 mm dicke Polyvinylbutyralschicht 31 — 12 mm dicke Glasscheibe 30 — 3 mm dicke Polyvinylbutyralschicht 33 — 6 mm dicke Glasscheibe 34 — 1,5 mm dicke Polyvinylbutyralschicht 35 — 6 mm dicke Glasscheibe 36. Diese Verbundglaseinheit 7 kann durch plastische Verformung der Polyvinylbutyralschichten noch vorhandene Restenergien aufnehmen. Sie dient außerdem zum Abfangen der Splitter, die sich von der dahinterliegenden Verbundglaseinheit lösen.

Auf der dem Explosionsherd zugewandten Seite des Fensters ist in einem verhältnismäßig großen Abstand B vor der Verbundglaseinheit 4 eine weitere Verbundglaseinheit 8 angeordnet. Auch diese Verbundglaseinheit 8 ist von einem Stahlrahmen 18 umgeben, der wiederum aus miteinander verschweißten Profilabschnitten besteht. Die Verbundglaseinheit 8 besteht aus drei Einzelglasscheiben 40 aus 8 mm dickem Floatglas, die durch eine 0,76 mm dicke Schicht 41 und eine 3 mm dicke Schicht 42, jeweils aus Polyvinylbutyral, miteinander verbunden sind. Diese Verbundglaseinheit 8 hat eine ausgeprägte einbruchhemmende Wirkung. Sie soll verhindern, daß der Sprengsatz unmittelbar vor den eigentlichen Explosionsschutzscheiben 4, 5 angebracht werden kann. Der Abstand B zwischen dieser Verbundglasscheibe 8 und der Verbundglasscheibe 4 beträgt etwa 150 mm.

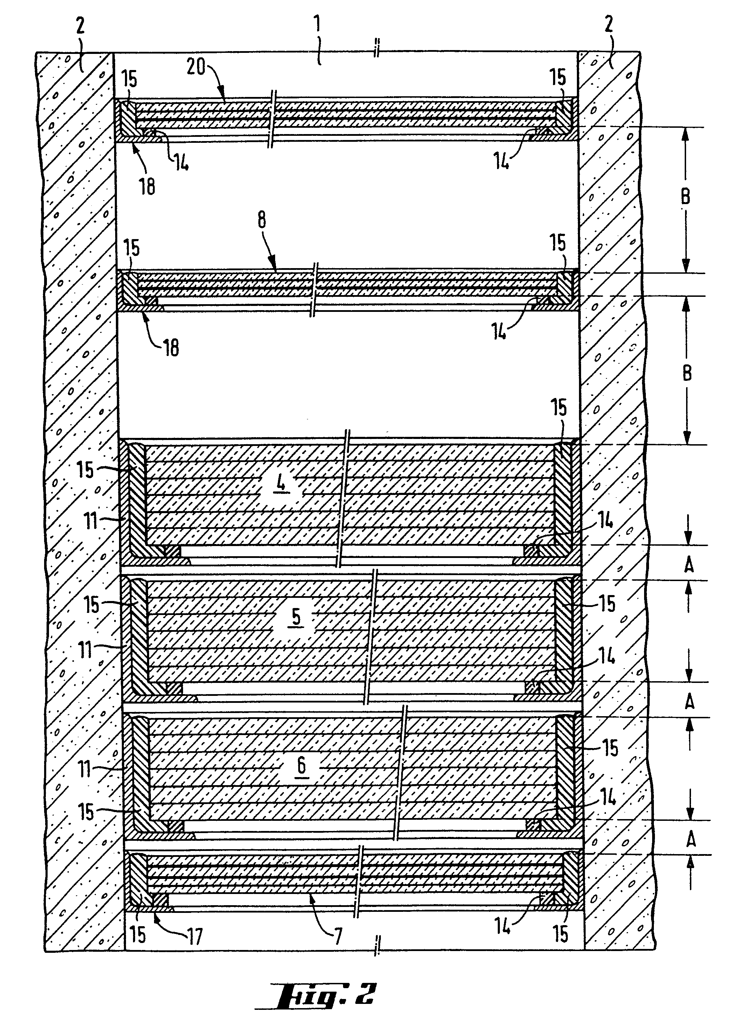

In der Fig. 2 ist ein anderes explosionssicheres Fenster dargestellt, das grundsätzlich aus den gleichen Verbundglaselementen aufgebaut ist wie das in Fig. 1 dargestellte Fenster. Es umfaßt drei jeweils etwa 120 mm dicke Verbundglaseinheiten 4, 5, 6, die mit einem Luftabstand A von jeweils etwa 30 mm angeordnet sind. Vor diesen drei dicken Verbundglaseinheiten ist wiederum ebenfalls mit einem Luftabstand A von etwa 30 mm die im wesentlichen für den Splitterauffang und für die Vernichtung der Restenergie vorgesehene Verbundglasscheibe 7 angeordnet.

Auf der dem Explosionsherd zugewandten Seite des Fensters ist vor der Verbundglasscheibe 8 im Abstand von etwa 150 mm eine weitere Verbundglasscheibe 20 angeordnet, die auf die gleiche Weise wie alle anderen Verbundglaseinheiten von einem geschlossenen Stahlrahmen 18 umgeben und in diesem federnd gelagert ist. Diese Verbundglasscheibe 20 entspricht in ihrem Aufbau der Verbundglasscheibe 8. Durch die doppelte Anordnung einer solchen einbruchhemmenden Verbundglasscheibe wird die Sicherheit gegen die Anbringung des Sprengkörpers unmittelbar vor den massiven Explosionsschutzscheiben weiter erhöht.

**Ansprüche**

1. Sprengwirkungshemmende Verglasung aus wenigstens zwei mit Luftabstand voneinander angeordneten Verbundglaseinheiten (4, 5), dadurch gekennzeichnet, daß jede Verbundglaseinheit (4, 5) von einem geschlossenen Rahmen (10) aus im Querschnitt L-förmigen Stahlprofilen umgeben ist, wobei der in die Sichtfläche hineinragende Schenkel (12) des Rahmens (10) auf der der Sprengwirkung abgewandten Seite angeordnet ist, und zwischen den Innenflächen des Stahlrahmens (10) und den Glasoberflächen ein Abstand (C) von wenigstens etwa 10 mm besteht, der von einem dauerelastischen Kunststoff mit einer Shore-Härte von wenigstens 25 Grad Shore und höchstens 60 Grad Shore ausgefüllt ist.

2. Sprengwirkungshemmende Verglasung nach Anspruch 1, dadurch gekennzeichnet, daß die die Verbundglaseinheiten (4, 5) einfassenden Stahlrahmen (10) aus an den Ecken miteinander verschweißten Profilabschnitten bestehen.

3. Sprengwirkungshemmende Verglasung nach Anspruch 1 und 2, dadurch gekennzeichnet, daß die in die Sichtfläche hineinragenden Schenkel (12) der Stahlrahmen (10) eine Länge von wenigstens 30 mm aufweisen.

4. Sprengwirkungshemmende Verglasung nach Anspruch 1 bis 3, dadurch gekennzeichnet, daß der Luftabstand (A) zwischen zwei Verdunglaseinheiten (4, 5) wenigstens 20 mm beträgt.

5. Sprengwirkungshemmende Verglasung nach Anspruch 1 bis 4, dadurch gekennzeichnet, daß der Zwischenraum zwischen den Innenflächen des Stahlrahmens (10) und den Glasoberflächen durch einen gießfähigen aushärtenden Kunststoff (15) ausgefüllt ist.

6. Sprengwirkungshemmende Verglasung nach Anspruch 5, dadurch gekennzeichnet, daß am vorderen Ende des in die Sichtfläche hineinragenden Schenkels (12) des Stahlrahmens (10) zwischen diesem und der Glasoberfläche ein diese Flächen gegen den gießfähigen Kunststoff (12) abdichtender Profilstreifen (14) aus einem dauerelastischen Kunststoff angeordnet ist.

7. Sprengwirkungshemmende Verglasung nach Anspruch 6, dadurch gekennzeichnet, daß der Profilstreifen (14) aus Butylkautschuk besteht.

8. Sprengwirkungshemmende Verglasung nach Anspruch 5 bis 7, dadurch gekennzeichnet, daß als aushärtender gießfähiger Kunststoff zum Ausfüllen des Zwischenraums zwischen dem Rahmen (10) und dem Verbundglas ein Zweikomponenten-Silikonkautschuk mit einer Endhärte von 30 bis 40 Grad Shore verwendet wird.

9. Sprengwirkungshemmende Verglasung nach einem der Ansprüche 1 bis 8, dadurch gekennzeichnet, daß die Verbundglaseinheiten (4, 5) eine Dicke von wenigstens etwa 100 mm aufweisen.

10. Sprengwirkungshemmende Verglasung nach Anspruch 9, dadurch gekennzeichnet, daß sie zwei Verbundglaseinheiten (4, 5) mit je einer Dicke von etwa 120 mm, und auf der der Sprengwirkung abgewandten Seite eine dünnere Verbundglasscheibe (7) mit einem erhöhten Anteil an plastisch verformbaren Zwischenschichten umfaßt.

11. Sprengwirkungshemmende Verglasung nach Anspruch 9, dadurch gekennzeichnet, daß sie drei Verbundglaseinheiten (4, 5, 6) mit je einer Dicke von etwa 120 mm, und auf der der Sprengeinwirkung abgewandten Seite eine dünnere Verbundglasscheibe (8) mit einem erhöhten Anteil an plastisch verformbaren Zwischenschichten umfaßt.

12. Sprengwirkungshemmende Verglasung nach einem der Ansprüche 9 bis 11, dadurch gekennzeichnet, daß auf der der Sprengwirkung zugewandten Seite mit vergrößertem Luftabstand (B) vor der ersten Verbundglaseinheit (4) eine oder mehrere weitere Verbundglaseinheiten (8, 20) mit einbruchhemmender Wirkung angeordnet ist (sind).

**Claims**

1. An explosion resisting glazing structure made up of at least two air-spaced laminated glass units (4 and 5) characterized in that each of said laminated glass units (4 and 5) is placed within a closed frame (10) made up of steel L-sections with the flange (12), running into the viewed area, of the frame (10) placed on the side opposite to the explosion side and between the inner faces of the said steel frame (10) and the glass surfaces there is a space (C) of at least about 10 mm, said space being filled up by a permanently elastic synthetic resin with a Shore hardness of at least 25 degrees Shore and at the most 60 degrees Shore.

2. The explosion resisting glazing structure as claimed in claim 1 characterized in that the steel frames (10) placed round the laminated glass units (4 and 5) are made up of lengths of section that are welded together at the corners.

3. The explosion resisting glazing structure as claimed in claim 1 and in claim 2 characterized in that the flanges (12), running into the viewed area, of the steel frames (10) have a length of at least 30 mm.

4. The explosion resisting glazing structure as claimed in any one of claims 1 to 3 characterized in that the air gap (A) between two laminated glass units (4 and 5) is equal to at least 20 mm.

5. The explosion resisting glazing structure as claimed in any one of claims 1 to 4 characterized in that the space between the inner faces of the steel frame (10) and the glass surfaces is filled up with a casting, curing synthetic resin (15).

6. The explosion resisting glazing structure as claimed in claim 5 characterized in that on the front end of the flange (12), running into the viewed area, of the steel frame (10) and between the last-named and the glass surface there is a moulding (14), producing a seal between such surfaces and the casting resin (12), said moulding being made of permanently elastic synthetic resin.

7. The explosion resisting glazing structure as claimed in claim 6 characterized in that the moulding (14) is made of butyl rubber.

8. The explosion resisting glazing structure as claimed in any one of claims 5 to 7 characterized in that for the curing casting synthetic resin used for filling up the space between the frame (10) and the laminated glass use is made of a two-component silicone rubber composition with a final hardness of 30 to 40 degrees Shore.

9. The explosion resisting glazing structure as claimed in any one of claims 1 to 8 characterized in that the said laminated glass units (4 and 5) have a thickness of at least about 100 mm.

10. The explosion resisting glazing structure as claimed in claim 9 characterized by two laminated glass units (4 and 5) each with a thickness of about 120 mm and by a thinner laminated glass sheet (7), placed on the side opposite the explosion side, having a greater amount of plastically deforming inbetween layers.

11. The explosion resisting glazing structure as claimed in claim 9 characterized by three laminated glass units (4, 5 and 6) each with a thickness of about 120 mm and by a thinner laminated glass sheet (7), placed on the side opposite the explosion side, having a greater amount of plastically deforming inbetween layers.

12. The explosion resisting glazing structure as claimed in any one of claims 9 to 11 characterized by one or more further laminated glass units (8 and 20) with an anti-smash effect placed on the side facing the explosion with a greater air gap (B) in front of the first laminated glass unit (4).

**Revendications**

1. Vitrage résistant aux explosions fait d'au moins deux volumes de verre feuilleté (4, 5) séparés l'un de l'autre par un espace d'air, caractérisé en ce que chaque volume de verre feuilleté (4, 5) est entouré par un cadre fermé (10) fait de profilés d'acier de section en L, étant entendu que l'aile (12) du cadre (10) qui s'étend dans la surface de visibilité est disposée du côté opposé à l'action de la charge explosive et qu'entre les surfaces internes du cadre d'acier (10) et les faces du verre est prévue une distance (c) d'au moins 10 mm environ qui est remplie d'une matière plastique à élasticité permanente présentant une dureté Shore d'au moins 25° Shore et d'au plus 69° Shore environ.

2. Vitrage résistant aux explosions suivant la revendication 1, caractérisé en ce que les cadres d'acier (10) entourant les volumes de verre feuilleté (4, 5) sont formés de segments de profilés soudés les uns aux autres aux coins.

3. Vitrage résistant aux explosions suivant les revendications 1 et 2, caractérisé en ce que l'aile (12) du cadre d'acier (10) qui s'étend dans la surface de visibilité présente une longueur d'au moins 30 mm.

4. Vitrage résistant aux explosions suivant les revendications 1 à 3, caractérisé en ce que la distance (A) correspondant à l'espace d'air séparant deux volumes de verre feuilleté (4, 5) est d'au moins 20 mm.

5. Vitrage résistant aux explosions suivant l'une quelconque des revendications 1 à 4, caractérisé en ce que l'espace intermédiaire entre les surfaces internes du cadre d'acier (10) et la surface du verre est rempli d'une matière plastique durcissable (15) propre à être coulée.

6. Vitrage résistant aux explosions suivant la revendication 5, caractérisé en ce qu'à l'extrémité antérieure de l'aile (12) du cadre d'acier (10) qui s'étend dans la surface de visibilité, entre cette aile et la surface du verre, est prévue une bande profilée (14) faite d'une matière plastique à élasticité permanente qui assure l'étanchéité de cette surface contre la matière plastique (12) pouvant être coulée.

7. Vitrage résistant aux explosions suivant la revendication 6, caractérisé en ce que la bande profilée (14) est en caoutchouc butyle.

8. Vitrage résistant aux explosions suivant l'une quelconque des revendications 5 à 7, caractérisé en ce qu'à titre de matière plastique durcissable pouvant être coulée destinée à remplir l'espace intermédiaire entre le cadre (10) et le verre feuilleté, on utilise un caoutchouc de silicone à deux composants présentant une dureté finale de 30 à 40° Shore.

9. Vitrage résistant aux explosions suivant l'une quelconque des revendications 1 à 8, caractérisé en ce que les volumes de verre feuilleté (4, 5) ont une épaisseur d'au moins environ 100 mm.

10. Vitrage résistant aux explosions suivant la revendication 9, caractérisé en ce qu'il comprend deux volumes de verre feuilleté (4, 5) qui ont chacun une épaisseur d'environ 100 mm et, du côté opposé à l'explosion, une vitre en verre feuilleté (7) plus mince présentant une proportion plus importante de couches intermédiaires déformables en matière plastique.

11. Vitrage résistant aux explosions suivant la revendication 9, caractérisé en ce qu'il comporte trois volumes de verre feuilleté (4, 5, 6) ayant chacun une épaisseur d'environ 120 mm et, du côté opposé à l'explosion, une vitre en verre feuilleté plus mince (8) présentant une proportion plus importante de couches intermédiaires déformables en matière plastique.

12. Vitrage résistant aux explosions suivant l'une quelconque des revendications 9 à 11, caractérisé en ce que du côté tourné vers l'explosion, à une distance (B) correspondant à l'espace d'air accrue devant le premier volume de verre feuilleté (4), sont prévus un ou plusieurs autres volumes de verre feuilleté (8, 20) efficaces contre les percements.

**Fig.1**

**Fig. 2**